Europäisches Patentamt

European Patent Office

Office européen des brevets

(11) Veröffentlichungsnummer: **0 105 418**
**B1**

(12) **EUROPÄISCHE PATENTSCHRIFT**

(45) Veröffentlichungstag der Patentschrift:
**03.06.87**

(21) Anmeldenummer: **83109434.7**

(22) Anmeldetag: **22.09.83**

(51) Int. Cl.⁴: **G 21 C 17/00, G 01 N 29/00**

(54) **Rohrmanipulator für das Durchfahren von Rohrleitungen.**

(30) Priorität: **06.10.82 DE 3236947**

(43) Veröffentlichungstag der Anmeldung:
**18.04.84 Patentblatt 84/16**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
**EP - A - 0 061 078**
**DE - A - 2 640 055**
**FR - A - 2 320 542**
**FR - A - 2 342 455**
**US - A - 3 968 568**
**US - A - 4 170 902**
**US - A - 4 218 923**
**US - A - 4 306 459**

**PIPE LINE INDUSTRY, Juli 1971, Seiten 37-38.**
**"Ultrasonic tool detects and records pipe flaws"**

(73) Patentinhaber: **Hitzel, Rainer, Breidertring 1b,
D-6074 Rödermark (DE)**

(72) Erfinder: **Hitzel, Rainer, Breidertring 1b,
D-6074 Rödermark (DE)**

(74) Vertreter: **Zapfe, Hans, Dipl.-Ing.,
Seestrasse 2 Postfach 30 04 08, D-6054 Rodgau-3 (DE)**

## Beschreibung

Die Erfindung betrifft einen Rohrmanipulator für das Durchfahren von Rohrleitungen in axialer Richtung mit mindestens einem Fahrgestell, in dem zwei mit der Rohrleitung in Berührung stehende, diametral gegenüberliegende Reibrollen vorgesehen sind, die durch einen gemeinsamen Längsantrieb kontinuierlich antreibbar sind.

Durch die FR-A-2 342 455 ist ein derartiger Rohrmanipulator mit nur einem einzigen Fahrgestell bekannt, bei dem auf diametral gegenüberliegenden Seiten angetriebene Reibbänder angeordnet sind, die über mit den Reibbändern umlaufende Andruckrollen mittels Federn gegen die Rohrleitung gepresst werden, so dass das Fahrgestell nach Art eines Kettenfahrzeugs durch die Rohrleitung hindurch bewegt werden kann. Während mit einem solchen Fahrgestell auch sehr enge Rohrleitungen bis hinunter zu 70 mm Durchmesser durchfahren werden können, ist es wegen der starren Bauweise über die Gesamtlänge der Vorrichtung nicht möglich, Rohrkrümmer mit engen Krümmungsradien zu durchfahren, wie sie insbesondere im Kraftwerks- und Reaktorbau häufig anzutreffen sind.

Ein Rohrmanipulator der eingangs beschriebenen Art ist auch Gegenstand der DE-A-3210 489. Der dort beschriebene Rohrmanipulator hat sich für Rohrleitungen mittleren und grösseren Durchmessers durchaus bewährt, wobei beispielhaft der Durchmesserbereich zwischen 150 und 900 mm genannt ist. Eine weitere Miniaturisierung in Richtung auf den Einsatz für kleinere Rohrdurchmesser hat sich jedoch als extrem aufwendig und wegen des Platzbedarfs bestimmter Bauteile als nur schwer möglich erwiesen. Hierbei wird bevorzugt an Rohrdurchmesser zwischen 80 und 150 mm, ja sogar unter 80 mm gedacht.

Der Erfindung liegt daher die Aufgabe zugrunde, einen Rohrmanipulator der eingangs bschriebenen Art anzugeben, der nicht nur für Rohrleitungen geringeren Innendurchmessers geeignet ist, sondern auch eine zuverlässige Führung durch enge Rohrbögen bis hinunter zu einem Krümmungsradius R = 1,5 × D bei Krümmern für einen Winkel von 90 Grad erlaubt und ein für seine Grösse geringes Gewicht besitzt (D = Aussendurchmesser der Rohrbögen).

Die Lösung der gestellten Aufgabe erfolgt bei dem eingangs beschriebenen Rohrmanipulator erfindungsgemäss dadurch, dass mindestens zwei Fahrgestelle unter Zwischenschaltung je eines biegeelastischen, aber drehsteifen Hohlkörpers miteinander verbunden sind, dass die Reibrollen aller Fahrgestelle durch eine im Innern der Hohlkörper und durch die Fahrgestelle verlaufende flexible Welle antreibbar sind und dass die radial durch beide Reibrollen eines Fahrgestells gelegte Mittenebene zu der entsprechenden Ebene des benachbarten Fahrgestells um die Drehachse der Welle verdreht ist.

Die Verwendung biegeelastischer, aber drehsteifer Hohlkörper erlaubt die elastische Kopplung der jeweils benachbarten Fahrgestelle unter gleichzeitiger Freilassung der Längsachse des Hohlkörpers. Als Hohlkörper geeignet sind beispielsweise Elastomerschläuche mit über Kreuz gewendelten Einlagen, beispielsweise mit eingelegten, sich diagonal kreuzenden Stahldrähten. In ganz besonders bevorzugter Weise haben sich jedoch Faltenbälge als geeignet erwiesen, die für die Verbindung von Rohrleitungen auch unter der Bezeichnung «Kompensatoren» bekannt geworden sind. Derartige Faltenbälge haben, insbesondere dann, wenn sie aus Edelstahl bestehen, eine hohe Flexibilität gegenüber Biegung, können aber dennoch beträchtliche Drehmomente aufnehmen, d.h. die durch sie verbundene Fahrgestelle auch bei Einwirkung äusserer Kräfte in einem vorgegebenen Winkelabstand zueinander halten.

Die «Mittenebene» ist innerhalb eines Fahrgestells diejenige Ebene, die durch die Mitte beider Reibrollen verläuft, und zwar in der Weise, dass die Achsen der Reibrollen senkrecht zu der genannten Mittenebene verlaufen. Bei der Geradeausfahrt des Fahrgestells liegt auch die Längsachse der zu durchfahrenden Rohrleitung in eben dieser Mittenebene. Durch den Versatz der Mittenebene eines jeden Fahrgestells in Umfangsrichtung gegenüber der Mittenebene des jeweils benachbarten Fahrgestells wird erreicht, dass zumindest der grösste Teil der Reibrollen auf unterschiedlichen Mantellinien der Rohrleitung abrollt. Dies ist von besonderer Bedeutung für den Fall, dass seitlich, insbesondere radial, einmündende Rohrleitungen überfahren werden müssen, die in der Regel einen kleineren Durchmesser (maximal 75% des Durchmessers der Hauptleitung) aufweisen. Durch entsprechende Wahl von Anzahl der Fahrgestelle und Raumwinkeln zwischen den jeweils benachbarten Mittenebenen kann auf diese Weise erreicht werden, dass jeweils die Reibrollen mindestens eines Fahrgestells mit der Rohrleitung im Reibschluss bleiben, so dass Vortrieb oder Rückzug des Rohrmanipulators gesichert sind. Hierbei ist zu beachten, dass beim Überfahren einer seitlichen Abzweigung mittels eines Fahrgestells der Reibantrieb auch derjenigen Reibrolle weitgehend wirkungslos wird, die in Berührung mit der Rohrleitung bleibt, weil die erforderliche Abstützkraft fehlt. Der Versatzwinkel a wird dabei zweckmässig nach der folgenden Beziehung gewählt:

$$\alpha = \frac{180°}{n-1}$$

wobei «n» die Anzahl der Fahrgestelle ist. Bei vier Fahrgestellen ist dabei der Versatzwinkel $\alpha = 60°$, wobei das erste und das letzte Fahrgestell eine um 180 Grad versetzte Lage einnehmen, d.h. ihre Mittenebenen liegen in einer gemeinsamen Ebene, Geradeausfahrt vorausgesetzt. Für die dazwischenliegende Fahrgestelle gilt die Forderung, dass diese einen Versatzwinkel gegenüber dem ersten und dem letzten Fahrgestell aufweisen und dass keine Winkelstellung zweimal vorkommt. Dies wird in einfachster Weise dadurch erreicht, dass das jeweils folgende Fahrgestell gegenüber dem vorangegangen Fahrgestell einen gleich grossen Versatzwinkel in jeweils gleichem Drehsinn aufweist.

Durch die Massnahme, dass die Reibrollen aller Fahrgestelle durch eine im Innern der Hohlkörper und durch die Fahrgestelle verlaufende flexible Welle antreibbar sind, wird erreicht, dass alle Reibrollen mit gleichem Drehsinn, d.h. in gleicher Fahrtrichtung, angetrieben werden, so dass auch beim Ausfall des Antriebs eines Fahrgestells beim Überfahren einer seitlichen Abzweigung die Vortriebskraft durch die übrigen Fahrgestelle unverändert aufrechterhalten bleibt.

Unter dem Ausdruck «Fahrgestell» werden sämtliche Bauelemente verstanden, die die Reibrollen tragen und eine zuverlässige Halterung der Antriebselemente herbeiführen.

Als «flexible Wellen» kommen sowohl biegsame Wellen aus Drahtseilen in Frage, die aufgrund ihrer besonderen Drahtanordung und Herstellart eine ausreichend grosse Torsionssteifigkeit besitzen, als auch Gelenkwellen mit Kardangelenken. Es können auch biegsame Wellen und Gelenkwellen in Reihenanordnung verwendet werden, wobei die Gelenkwellen an den Stellen grösster Drehmomente angeordnet werden.

Der Erfindungsgegenstand ermöglicht nicht nur eine erhebliche Herabsetzung des minimal möglichen Innendurchmessers der zu durchfahrenden Rohrleitung, sondern er erlaubt auch eine zuverlässige Führung durch Rohrleitungen mit seitlichen Anschlüssen sowie durch enge Rohrbögen mit einem Krümmungsradius R bis hinunter zur R = 1,5 D, und zwar bei 90 Grad-Krümmern, von denen auch mehrere hintereinander und in einem beliebigen Raumwinkel zueinander stehen können. Dabei besitzt der Erfindungsgegenstand auch noch ein geringes Gewicht, der die Verfahrbarkeit in senkrechten Leitungsabschnitten erleichtert. Dies alles ist möglich, ohne dass eine übertriebene Miniaturisierung der einzelnen Bauteile erfolgen müsste, da der Erfindungsgegenstand mit einer verhältnismässig geringen Anzahl von Bauteilen auskommt, die innerhalb eines verfügbaren Volumens untergebracht werden müssen.

Es ist gemäss der weiteren Erfindung besonders vorteilhaft, wenn in jedem Fahrgestell ein von der flexiblen Welle angetriebenes Differentialgetriebe mit zwei Antriebswellen angeordnet ist, die zur Mittenebene E-E parallel verlaufen und über je eine Zahnscheibe und je einen Zahnriemen mit je einem auf der gegenüberliegenden Seite der Mittenebene liegenden Winkeltrieb verbunden sind, der unmittelbar auf die jeweilige Reibrolle einwirkt.

Durch die Anordnung eines Differentialgetriebes ist es möglich, auch enge Kurven zu durchfahren, ohne dass an den Reibrollen ein Schlupf auftritt, der zu erheblichen Leistungsverlusten führen würde. Diese Funktion eines Differentialgetriebes ist von der Kraftfahrzeugtechnik her bekannt. Die Kombination des Differentialgetriebes mit der räumlichen Lage der Antriebswellen und mit dem Verlauf der Zahnriemen auf die gegenüberliegenden Seite der Mittenebene führt in Verbindung mit dem Winkeltrieb zu einem ausserordentlich kompakten und symmetrischen Aufbau aller Antriebsteile und ermöglicht dennoch eine vibrationsfreie Kraftübertragung.

Der Vorteil der Verwendung eines Zahnriementriebs ist darüberhinaus auch in Verbindung mit einer besonders vorteilhaften weiteren Ausgestaltung des Erfindungsgegenstandes zu sehen, die darin besteht, dass jedes Fahrgestell zwei im Abstand gehaltene parallele Tragplatten aufweist, in denen Lagerböcke für die Reibrollen radial beweglich geführt sind, und dass die Lagerböcke durch Federn radial nach aussen belastet sind.

Die Oberfläche der Reibrollen ist mit einem Belag mit hohem Reibungskoeffizienten wie Gummi oder einem synthetischen Elastomeren versehen. Durch die unter Federspannung radial beweglichen Lagerböcke wird zusätzlich eine zuverlässige Anpressung der Reibrollen an die Rohrleitung ermöglicht, wobei auch ein Überfahren von Oberflächenunregelmässigkeiten wie Schweissnähten, einem radialen Rohrversatz etc. ermöglicht wird. Der Zahnriemen, dessen beide Trumms durch die angegebenen Merkmale senkrecht zur Mittenebene E-E und damit senkrecht zur Bewegungsrichtung der Reibrollen verlaufen, ermöglicht die notwendige Radialverschiebung der Reibrollen durch eine seitliche Ausweichbewegung des Zahriemens, ohne dass hierbei Antriebsteile überfordert würden. Es ist lediglich erforderlich, die Zahnscheiben auf den Antriebswellen des Differentialgetriebes mit einer entsprechenden Breite auszuführen, so dass die Zahnriemen auf den Zahnscheiben entsprechend hin und her laufen können.

Die Tragplatten, die im Hinblick auf den Innenquerschnitt der Rohrleitung kreisförmig ausgebildet sind, bilden die tragenden Teile des Fahrgestells. Sie dienen gleichfalls als Befestigungselement für die Funktionsteile des Antriebs, die zwischen den Tragplatten und auf den Aussenflächen der Tragplatten montiert sein können. Durch radiale, parallelwandige Ausnehmungen an diametral gegenüberliegenden Stellen der Tragplatten lassen sich auf einfache Weise Führungen für die Lagerböcke bilden, worauf in der Detailbeschreibung noch näher eingegangen wird.

Weitere vorteilhafte Ausgestaltungen ergeben sich aus den übrigen Unteransprüchen.

Der Erfindungsgegenstand findet bevorzugt Anwendung bei der Inspektion und Dokumentation der Innenflächen von Rohrleitungen bei den nachstehend angegebenen Rohrleitungen. Dabei kann der Rohrmanipulator bevorzugt mit einem Transportkopf versehen sein, der in Fahrtrichtung vor dem vordersten Fahrgestell angeordnet und gleichfalls in der Rohrleitung geführt ist. Dieser Transportkopf kann entweder mit einem Kamerasystem für axiale und radiale Sicht ausgestattet sein, im zuletzt genannten Fall mit einem Drehspiegelvorsatz, oder mit einem starren oder flexiblen Endoskop für axiale und radiale Sicht. Ein derart ausgerüsteter Rohrmanipulator ermöglicht eine visuelle Inspektion und Dokumentation durch Fernsehübertragung. Bei Ausstattung mit einer Strahlenquelle lässt sich auch eine zerstörungsfreie Werkstoffprüfung durchführen, beispielsweise eine Röntgenfotografie von Schweissnähten.

Zielgruppen für derartige Rohrmanipulatoren sind die Mineralöl- und die chemische Industrie, Wasser- und Gasversorgungsunternehmen, Kernkraftwerke, Transportunternehmen, darunter Schiffahrtsgesellschaften, Maschinen- und Anlagenbau, Hoch- und Tiefbau, Röhren- und Kesselhersteller, technische Überwachungsvereine etc.

Ein Ausführungsbeispiel des Erfindungsgegenstandes und seine Einzelheiten werden nachfolgend anhand der Figuren 1 bis 6 näher erläutert. Es zeigen:

Figur 1 einen Längsschnitt durch eine Rohrleitung mit einem vollständigen, darin befindlichen Rohrmanipulator mit vier Fahrgestellen,

Figur 2 eine Draufsicht in axialer Richtung auf ein Fahrgestell,

Figur 3 eine Seitenansicht des Fahrgestells nach Figur 2,

Figur 4 einen Radialschnitt durch ein Fahrgestell bzw. einen Axialschnitt durch dessen Differentialgetriebe in vergrössertem Massstab und

Figur 5 eine Seitenansicht des Motors für den Längsantrieb,

Figur 6 einen Längsschnitt durch die Verbindungsteile zwischen Motor und hinterstem Fahrgestell.

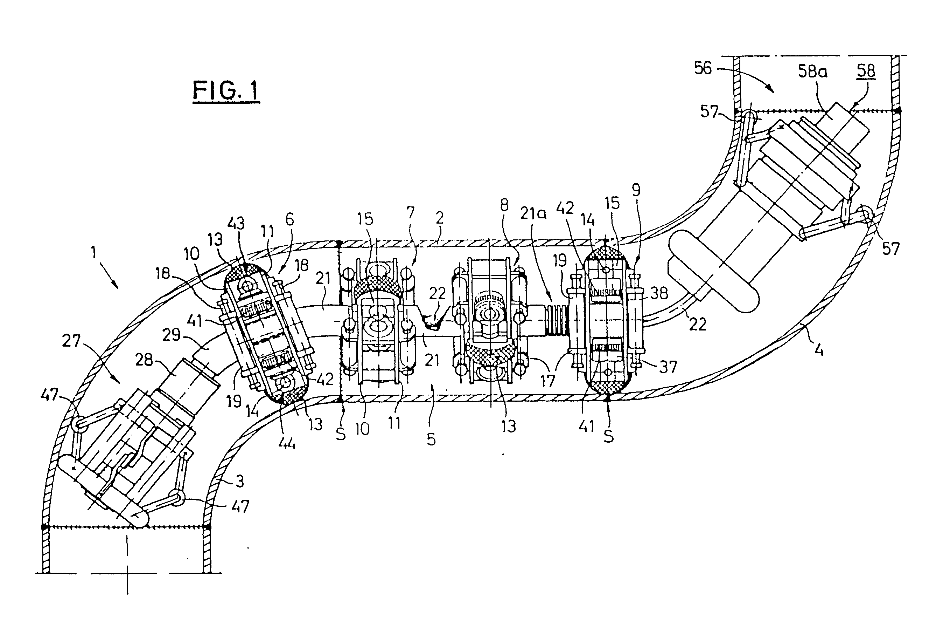

In Figur 1 ist eine Rohrleitung 1 dargestellt, die aus einem Zylinderstück 2 und zwei durch Schweissnähte angesetzten Rohrkrümmern 3 und 4 besteht. Die Schweissnähte S sind nur angedeutet.

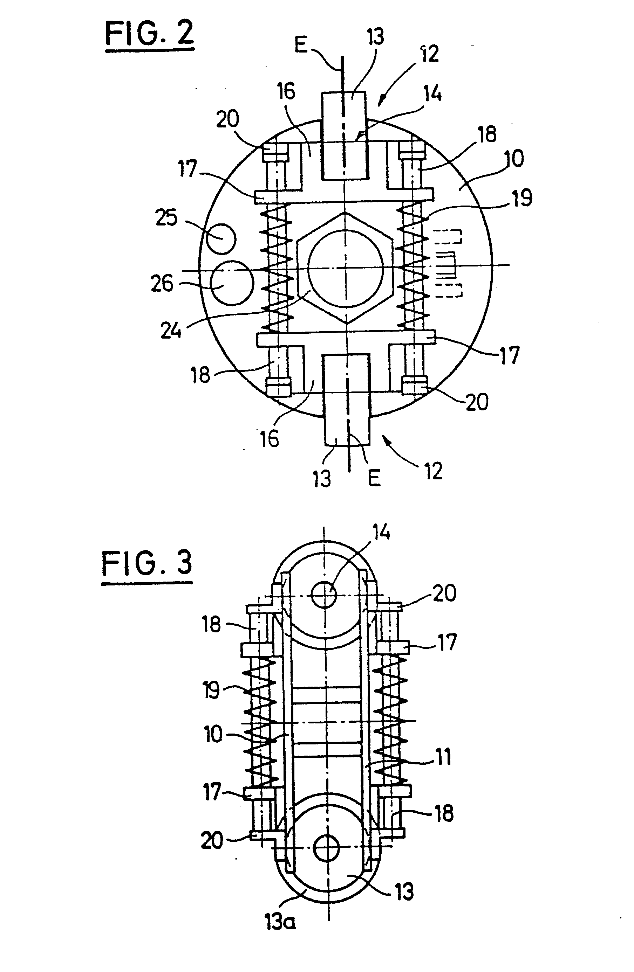

In der Rohrleitung 1 befindet sich ein Rohrmanipulator 5 mit vier Fahrgestellen 6, 7, 8 und 9, die völlig gleich aufgebaut sind, so dass sich die Beschreibung auf ein einziges Fahrgestell beschränken kann. Jedes Fahrgestell besitzt zwei im wesentlichen kreisförmige parallele Tragplatten 10 und 11, die auf diametral gegenüberliegenden Seiten mit parallelwandigen, radialen Ausnehmungen 12 versehen sind (siehe auch Figuren 2 und 3). Die Ausnehmungen dienen gleichzeitig als Radialführungen für Reibrollen 13, deren Achsen 14 senkrecht zu den parallelen Wänden der Ausnehmungen 12 stehen. Eine gemeinsame Mittenebene E-E ist radial durch die beiden Reibrollen 13 gelegt, so dass die Achsen 14 senkrecht zu dieser Mittenebene E-E verlaufen. Die Reibrollen 13 sind mit einem elastomeren Belag 13a mit hohem Reibungskoeffizienten versehen (Figur 3).

Die Reibrollen 13 sind mittels ihrer Achsen 14 in Lagerböcken 15 gelagert (Figur 1, Fahrgestelle 7 und 9), die zwischen den Tragplatten 10 und 11 in radialer Richtung geführt sind. Die Radialführung geschieht durch die parallelen Wandungen der Ausnehmungen 12 einerseits und durch mit den Lagerböcken 15 verbundene Flanschplatten 16 andererseits (Figur 2).

An den Flanschplatten 16 und damit an den Lagerböcken 15 sind Augen 17 angebracht, die folgenden Zweck haben: Auf den Tragplatten 10 und 11 sind parallel zu diesen und zur Mittenebene E-E paarweise Führungsstangen 18 mittels ihrer Enden befestigt. Diese Führungsstangen sind durch die Augen 17 mit ausreichendem Radialspiel hindurchgeführt, so dass keine Überbestimmung im Hinblick auf die Radialführung der Reibrollen 13 auftritt. Zwischen den jeweils gegenüberliegenden Augen 17 sind auf den Führungsstangen 18 Federn 19 angebracht, die die Augen 17 und damit die Lagerböcke 15 auseinanderschieben, bis die Augen 17 zum Anschlag an Haltewinkeln 20 kommen, mit denen die Führungsstangen 18 an den Tragplatten 10 bzw. 11 befestigt sind. Durch diese Massnahme wird die Radialbeweglichkeit der Lagerböcke 15 nach aussen hin begrenzt, sofern sich das Fahrgestell nicht gerade in einer Rohrleitung befindet.

Gemäss Figur 1 sind jeweils 2 benachbarte Fahrgestelle durch einen biegeelastischen, aber drehsteifen Hohlkörper 21 verbunden, der als Faltenbalg ausgebildet ist und aus Edelstahl besteht. Die Ausbildung als Faltenbalg ist bei 21a nur angedeutet.

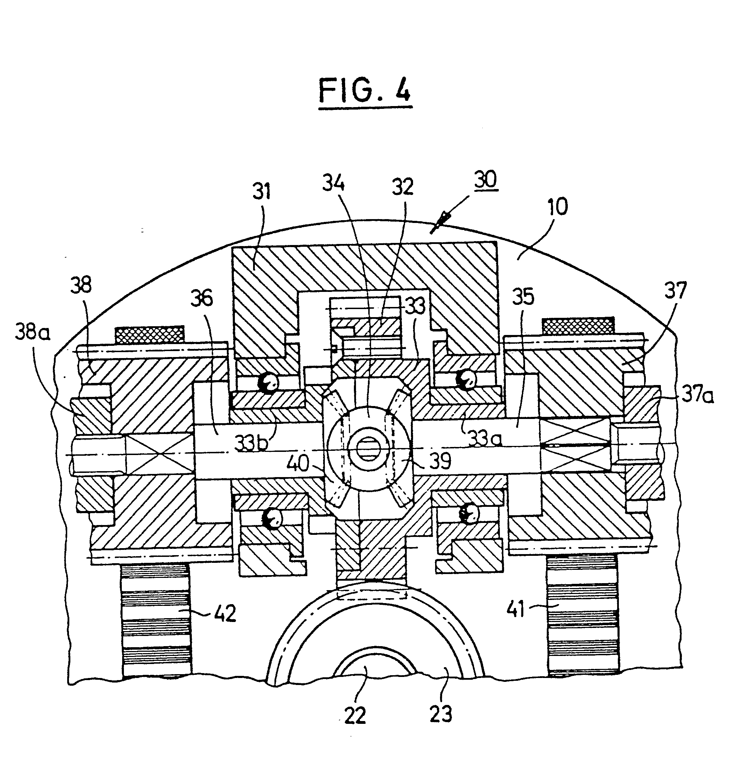

Der zwischen den Fahrgestellen 7 und 8 liegende Hohlkörper 21 ist aufgebrochen dargestellt, so dass eine im Innern aller Hohlkörper und durch die Fahrgestelle hindurch verlaufende flexible Welle 22 sichtbar ist, die im vorliegenden Falle als biegsame Welle ausgeführt ist, d.h. aus einem torsionssteifen Drahtseil besteht. Die flexible Welle 22 trägt im Innern eines jeden Fahrgestells eine Schnecke 23, auf die im Zusammenhang mit Figur 4 noch näher eingegangen wird. Die Enden der Hohlkörper 21 sind jeweils mit sechseckigen Flanschen 24 versehen, mit denen sie mit den Tragplatten 10 bzw. 11 verschraubt sind (Figur 2). In den Tragplatten 10 und 11 befinden sich noch fluchtende Bohrungen 25 und 26, die zum Hindurchführen von Übertragungsleitungen etc. dienen.

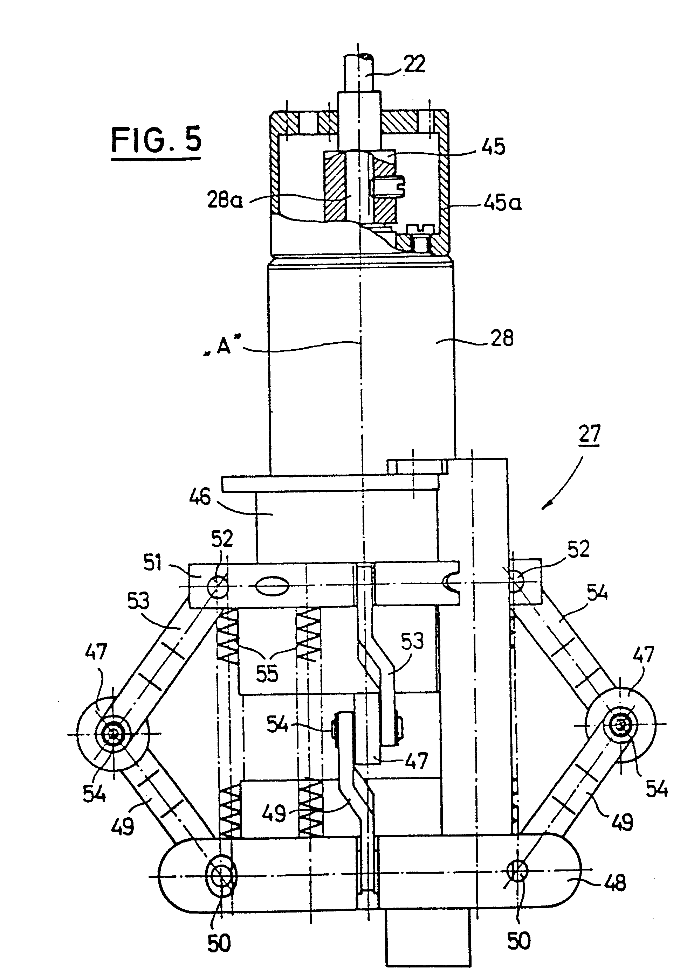

Das eine Ende der flexiblen Welle 22 ist mit einem Motor 27 über ein Untersetzungsgetriebe 28 gekuppelt. Dieses Getriebe steht seinerseits über einen analogen biegeelastischen, aber drehsteifen Hohlkörper 29 mit dem nächstgelegenen Fahrgestell 6 in Verbindung, so dass eine elastische Führung ebenso gewährleistet ist, wie die Aufnahme des Gegendrehmoments der flexiblen Welle 22 durch den Hohlkörper 29. Motor 27 und Getriebe 28 bilden den Längsantrieb des Rohrmanipulators 5. Weitere Einzelheiten sind in Figur 5 dargestellt.

In Figur 4 ist die Umlaufkante einer Tragplatte 10 ausschnittweise dargestellt, um in etwa die massstäblichen Verhältnisse und die koaxiale Anordnung zur flexiblen Welle 22 mit der Schnecke 23 zu verdeutlichen. Die Schnecke 23 wirkt mit einem Differentialgetriebe 30 zusammen, das in einem Getriebegehäuse 31 untergebracht ist, das seinerseits zwischen den Tragplatten 10 und 11 durch Verschraubung eingespannt ist. Zu dem Differentialgetriebe gehört ein Umlaufrad 32, in welches die Schnecke 23 eingreift und das mit einem Planetenträger 33 und Planetenrädern 34 verbunden ist, von denen nur eins dargestellt ist. In dem Planetenträger 33, der aus zwei rotationssymmetrischen Teilen 33a und 33b zusammengesetzt ist, die ihrerseits im Getriebegehäuse 31 über nicht näher bezeichnete Kugellager gelagert sind, sind wiederum drehbeweglich zwei Abtriebswellen 35 und 36 gelagert, die zur hier nicht gezeigten Mittenebene E-E parallel verlaufen und je eine Zahnscheibe 37, 38 tragen, die durch Muttern 37a und 38a mit den Abtriebswellen 35 bzw. 36 verschraubt sind. Die Drehmomentenübertragung erfolgt durch nicht näher bezeichnete Vierkante. An den inneren Enden der Abtriebswellen 35 und 36 befinden sich Kegelräder 39 und 40, die mit den Planetenrädern 34 in an sich bekannter Weise im Eingriff stehen.

Auf den Zahnscheiben 37 und 38 laufen Zahnriemen 41 und 42, wobei deutlich erkennbar ist, dass die Zahnriemen eine geringere Breite aufweisen als die Zahnscheiben 37 und 38, so dass sie auf diesen aus den weiter oben beschriebenen Gründen hin und her laufen können.

Die Zahnriemen 41 und 42 führen – in Figur 4 nicht gezeigt – zu entsprechenden Zahnscheiben auf der gegenüberliegenden Seite der Mittenebene E-E. Diese Anordung ist in Figur 1 am Fahrgestell 6 erkennbar, wo die jenseitigen Umfangsteile der Zahnriemen 41 und 42 gezeigt sind. Dort sind die Zahnriemen mit je einem Winkeltrieb 43 bzw. 44 verbunden, die aus einem Kegelrädergetriebe mit einem Übertragungswinkel von 90 Grad bestehen. Je eines der Kegelräder steht über eine Welle mit je einer der Zahnscheiben in Verbindung, über die der Zahnriemen 41 bzw. 42 läuft , während das jeweils andere Kegelrad mit je einer der Achsen 14 der Reibrollen 13 drehfest verbunden ist. Bezugzeichen wurden der Übersichtlichkeit halber in Figur 1 fortgelassen, zumal diese Einzelheiten leicht verständlich sind. Die Winkeltriebe 43 bzw. 44 sind mit dem jeweiligen Lagerbock 15 starr verbunden, so dass auch die Riemenscheiben und die über diese geführten Umfangsteile der Zahnriemen 41 und 42 die Radialbewegung der Reibrollen 13 mitmachen (die Zahnriemen sind auf diesen Zahnscheiben in axialer Richtung geführt). Der sich über einen grossen Teil des Durchmessers der Tragplatten 10, 11 erstreckende Abstand der jeweils zusammenwirkenden Zahnscheiben ermöglicht jedenfalls in Verbindung mit der grösseren Breite der Zahnscheiben 37 und 38 die erforderliche Querauslenkung ohne eine Beeinträchtigung der Übertragungsverhältnisse oder der Lebensdauer der Zahnriemen. Zahnriemen der beschriebenen Art sind übliche Handelsware.

In Figur 5 sind weitere Einzelheiten des Längsantriebes bzw. Antriebsmotors dargestellt. Das Untersetzungsgetriebe 28 besitzt eine Abtriebswelle 28a, die über eine Kupplung 45 mit der flexiblen Welle 22 verbunden ist. Die Kupplung 45 ist von einem Kupplungsgehäuse 45a umgeben.

Der Motor 27 besitzt ein Gehäuse 46, auf dessen Umfang mehrere radial nach aussen vorgespannte Laufrollen 47 angeordnet sind. Zu diesem Zweck ist am Ende des Gehäuses 46 ein Tragring 48 angeordnet, der gleichzeitig als Gleitschutz ausgebildet ist. In diesem Tragring sind Kniehebel 49 mittels Gelenken 50 in der Weise gelagert, dass die Kniehebel 49 in zur Achse A radialen Ebenen verschwenkbar sind.

Parallel zum Tragring 49 ist auf dem Gehäuse 46 längsverschiebbar ein weiterer Ring 51 angeordnet, in dem eine gleiche Anzahl von Gelenken 52 untergebracht ist. In diesen Gelenken sind weitere Kniehebel 53 in radialen Ebenen schwenkbar gelagert, die mit den Kniehebeln 49 mittlere Gelenkpunkte 54 bilden. In diesen Gelenkpunkten sind die Laufrollen 47 auf die gezeigte Weise angeordnet. Die Ringe 48 und 51 sind durch Zugfedern 55 gegeneinander verspannt, so dass die Laufrollen 47 um die Gelenke 50 radial nach aussen gedrängt werden. Dadurch wird im allgemeinen eine ausreichend zentrale Führung des Motors 27 in der Rohrleitung 1 erreicht. Es ist jedoch nicht erforderlich, dass sich der Motor 27 an allen Stellen der Rohrleitung abstützt, wie dies in Figur 1 angedeutet ist.

Figur 1 ist noch zu entnehmen, dass dem vordersten Fahrgestell 9 ein Transportkopf 56 vorgeschaltet ist, der in analoger Weise wie der Motor 27 auf seinem Umfang mit mehreren radial nach aussen vorgespannten Laufrollen 57 versehen ist. Zur Vermeidung von Wiederholungen sei auf die Konstruktionsdetails in Figur 5 verwiesen. Der Transportkopf 56 ist mit einem Kamerasystem 58 ausgestattet, von dem der Einfachheit halber nur das Objektiv 58a dargestellt ist.

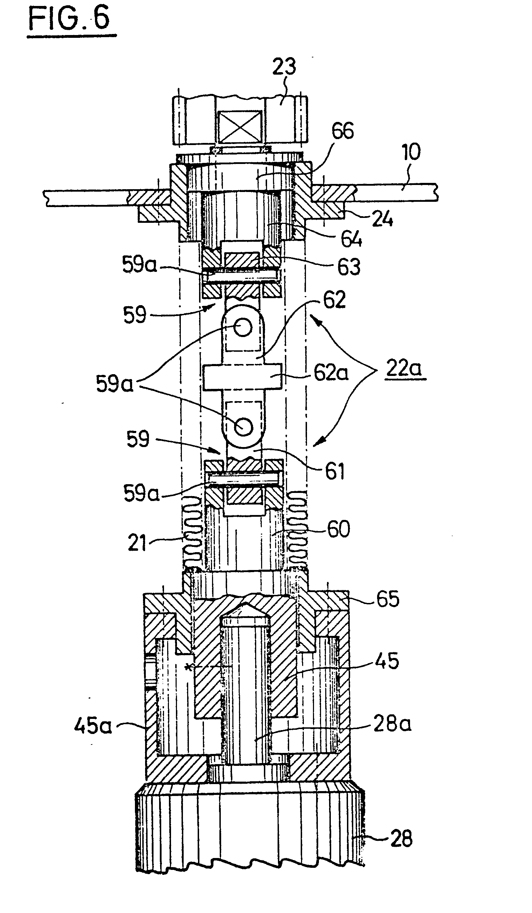

In Figur 6 ist der vorderste Teil des Untersetzungsgetriebes 28 dargestellt, an das sich nach unten (nicht gezeigt) der Motor 27 mit seinen Laufrollen 47 analog zu Figur 5 anschliesst. Abweichend von den Figuren 1 bis 5 ist jedoch die Abtriebswelle 28a über die Kupplung 45 mit einer Gelenkwelle 22a verbunden, die aus den beiden Kardangelenken 59 mit sich jeweils paarweise kreuzenden Gelenkzapfen 59a besteht. Die Gelenkzapfen sind in Gelenkgliedern 60 bis 64 gelagert, die das Drehmoment auf die Schnecke 23 übertragen, die analog Figur 3 jenseits der Tragplatte 10 des nachfolgenden Fahrgestells gelagert ist.

Die Kupplung 45 ist von dem Kupplungsgehäuse 45a umgeben, auf dessen Stirnseite ein Flansch 65 befestigt ist. Von diesem führt der auch hier als Faltenbalg ausgebildete torsionssteife Hohlkörper 21 (zwischen den strichpunktierten Linien) zu dem jenseitigen Flansch 24, der bereits in Figur 2 dargestellt ist. Alle Fahrgestelle sind auch untereinander in gleicher Weise verbunden. Das mittlere Gelenkglied 62 besitzt einen Bund 62a, mit dem es sich radial an dem torsionssteifen Hohlkörper 21 abstützt. Eine Welle 66 verbindet das letzte Gelenkglied 64 mit der Schnekke 23.

Die Gelenkwellenkonstruktion gemäss Figur 6 wird bevorzugt dort eingesetzt, wo das höchste Drehmoment auftritt, also zwischen Motor 27 und dem ersten Fahrgestell. Es ist aber durchaus möglich, z.B. aus Gründen einer einheitlichen Konstruktion, in allen torsionssteifen biegeelastischen Hohlkörpern 21 derartige Gelenkwellen vorzusehen, die im Bereich der Schnecken 23 miteinander gekuppelt sind, wie die biegsamen Wellen auch.

## Patentansprüche

1. Rohrmanipulator für das Durchfahren von Rohrleitungen in axialer Richtung mit mindestens einem Fahrgestell, in dem zwei mit der Rohrleitung (1) in Berührung stehende diametral gegenüberliegende Reibrollen (13) vorgesehen sind, die durch einen gemeinsamen Längsantrieb kontinuierlich antreibbar sind, dadurch gekennzeichnet, dass mindestens zwei Fahrgestelle (6, 7, 8, 9) unter Zwischenschaltung je eines biegeelastischen, aber drehsteifen Hohlkörpers (21) miteinander verbunden sind, dass die Reibrollen (13) aller Fahrgestelle (6, 7, 8, 9) durch eine im Innern der Hohlkörper (21) und durch die Fahrgestelle verlaufende flexible Welle (22, 22a) antreibbar sind und dass die radial durch beide Reibrollen (13) eines Fahrgestells gelegte Mittenebene (E-E) zu der entsprechenden Ebene des benachbarten Fahrgestells um die Drehachse der Welle (22) verdreht ist.

2. Rohrmanipulator nach Anspruch 1, dadurch gekennzeichnet, dass vier Fahrgestelle (6, 7, 8, 9) vorgesehen sind und dass der Versatz der durch die Reibrollen (13) gelegten Mittenebenen (E-E) von Fahrgestell zu Fahrgestell gleichsinnig 60° beträgt.

3. Rohrmanipulator nach Anspruch 2, dadurch gekennzeichnet, dass in jedem Fahrgestell (6, 7, 8, 9) ein von der flexiblen Welle (22) angetriebenes Differentialgetriebe (30) mit zwei Abtriebswellen (35, 36) angeordnet ist, die zur Mittenebene (E-E) parallel verlaufen und über je einen Zahnriemen (41, 42) mit je einem auf der gegenüberliegenden Seite der Mittenebene liegenden Winkeltrieb (43, 44) verbunden sind, der unmittelbar auf die jeweilige Reibrolle (13) einwirkt.

4. Rohrmanipulator nach Anspruch 3, dadurch gekennzeichnet, dass jedes Fahrgestell (6, 7, 8, 9) zwei im Abstand gehaltene parallele Tragplatten (10, 11) aufweist, in denen Lagerböcke (15) für die Reibrollen (13) radial beweglich geführt sind, und dass die Lagerböcke durch Federn (19) radial nach aussen belastet sind.

5. Rohrmanipulator nach Anspruch 4, dadurch gekennzeichnet, dass auf den Tragplatten (10, 11) parallel zu diesen und zur Mittenebene (E-E) paarweise Führungsstangen (18) mittels ihrer Enden befestigt sind, dass an den Lagerböcken (15) Augen (17) angebracht sind, die die Führungsstangen mit Spiel umgeben, und dass die Federn (19) zwischen die Augen gegenüberliegender Lagerböcke unter Vorspannung (Druckspannung) eingesetzt sind.

6. Rohrmanipulator nach Anspruch 1, dadurch gekennzeichnet, dass die flexible Welle (22) über einen Schneckentrieb (23, 32) mit dem Differentialgetriebe (30) in Verbindung steht.

7. Rohrmanipulator nach den Ansprüchen 3 und 4, dadurch gekennzeichnet, dass der Winkeltrieb (43, 44) an den Lagerböcken (15) gelagert ist.

8. Rohrmanipulator nach Anspruch 1, dadurch gekennzeichnet, dass als biegeelastischer, aber drehsteifer Hohlkörper (21, 29) Faltenbälge vorhanden sind.

9. Rohrmanipulator nach Anspruch 8, dadurch gekennzeichnet, dass die Faltenbälge aus Edelstahl bestehen.

10. Rohrmanipulator nach Anspruch 1, dadurch gekennzeichnet, dass der Längsantrieb durch einen Motor (27) erfolgt, der gleichfalls über einen biegeelastischen, aber drehsteifen Hohlkörper (29) mit dem nächstfolgenden Fahrgestell (6) verbunden und mit der flexiblen Welle (22) gekuppelt ist.

11. Rohrmanipulator nach Anspruch 10, dadurch gekennzeichnet, dass der Motor (27) auf dem Umfang seines Gehäuses (46) mit mehreren radial nach aussen vorgespannten Laufrollen (47) versehen ist.

12. Rohrmanipulator nach Anspruch 11, dadurch gekennzeichnet, dass die Laufrollen (47) im mittleren Gelenkpunkt (54) je eines Kniehebelsystems (49, 53) angeordnet sind, dessen übrige Gelenke (50, 52) in Ringen (48, 51) gelagert sind, die elastisch gegeneinander verspannt sind.

13. Rohrmanipulator nach Anspruch 1, dadurch gekennzeichnet, dass dem vordersten Fahrgestell (9) ein Transportkopf (56) vorgeschaltet ist.

14. Rohrmanipulator nach Anspruch 13, dadurch gekennzeichnet, dass der Transportkopf (56) auf seinem Umfang mit mehreren radial nach aussen vorgespannten Laufrollen (57) versehen ist.

15. Rohrmanipulator nach Anspruch 13, dadurch gekennzeichnet, dass der Transportkopf (56) mit einem Kamerasystem (58) ausgestattet ist.

16. Rohrmanipulator nach Anspruch 1, dadurch gekennzeichnet, dass die flexible Welle (22) aus Teilstücken einer biegsamen Welle zusammengesetzt ist, die innerhalb der Fahrgestelle (6, 7, 8, 9) miteinander gekuppelt sind.

17. Rohrmanipulator nach Anspruch 1, dadurch gekennzeichnet, dass die flexible Welle (22a) aus mindestens einer Gelenkwelle mit mindestens zwei Kardangelenken (59) besteht.

18. Rohrmanipulator nach den Ansprüchen 16 und 17, dadurch gekennzeichnet, dass die flexible Welle (22, 22a) aus Teilstücken einer biegsamen Welle und einer Gelenkwelle zusammengesetzt ist.

## Claims

1. A tube manipulator for traversing conduits in axial direction, comprising at least one carriage in which are provided in contact with the conduit (1) two diametrically opposed friction rollers (13), which can be continuously driven by a common longitudinally arranged drive, characterised in that at least two carriages (6, 7, 8, 9) are linked together via a respective interposed flexible, but torsionally rigid tubular part (21), that the friction rollers (13) of all the carriages (6, 7, 8, 9) can be driven by a flexible shaft (22, 22a) running inside the tubular part (21) and through the carriages, and that the central plane (E-E) laid radially through both friction rollers (13) of a carriage is twisted relative to the corresponding plane of the adjacent carriage about the rotational axis of the shaft (22).

2. The tube manipulator as claimed in Claim 1, characterised in that four carriages (6, 7, 8, 9) are provided and that the central planes (E-E) laid through the friction rollers (13) are offset in the same direction from carriage to carriage by 60°.

3. The tube manipulator as claimed in Claim 2, characterised in that in each carriage (6, 7, 8, 9) there is disposed a differential gear (30) driven by the flexible shaft (22) having two output shafts (35, 36) running parallel to the central plane (E-E) and connected via a respective toothed belt (41, 42) to a respective angular drive (43, 44) on the opposite side of the central plane, said angular drive acting directly on the respective friction roller (13).

4. The tube manipulator as claimed in Claim 3, characterised in that each carriage (6, 7, 8, 9) exhibits two parallel support plates (10, 11) held apart, in which bearing pedestals (15) for the friction rollers (13) are radially movably held, and that the bearing pedestals are stressed radially outwards by springs (19).

5. The tube manipulator as claimed in Claim 4, characterised in that pairs of guide rods (18) are attached by their ends on the support plates (10, 11), parallel to the latter and to the central plane (E-E), that bosses (17) are fixed on the bearing pedestals (15) which enclose the guide rods with clearance, and that the springs (19) are inserted between the bosses of opposed bearing pedestals in pretensioned state (compressive stress).

6. The tube manipulator as claimed in Claim 1, characterised in that the flexible shaft (22) communicates via a worm gear drive (23, 32) with the differential gear (30).

7. The tube manipulator as claimed in Claim 3 and 4, characterised in that the angular drive (43, 44) is seated on the bearing pedestals (15).

8. The tube manipulator as claimed in Claim 1, characterised by the presence of bellows as the flexible but torsionally rigid tubular part (21, 29).

9. The tube manipulator as claimed in Claim 8, characterised in that the bellows are made of special steel.

10. The tube manipulator as claimed in Claim 1, characterised in that the longitudinally arranged drive operates by a motor (27) which is also linked to the following carriage (6) via a flexible, but torsionally rigid tubular part (29) and coupled to the flexible shaft (22).

11. The tube manipulator as claimed in Claim 10, characterised in that on the periphery of its housing (46) the motor (27) is provided with several rollers (47) pretensioned radially outwards.

12. The tube manipulator as claimed in Claim 11, characterised in that the rollers (47) are disposed in the central point of articulation (54) of a respective toggle system (49, 53) whose remaining joints (50, 52) are seated in rings (48, 51) braced against each other elastically.

13. The tube manipulator as claimed in Claim 1, characterised in that the frontmost carriage (9) is preceded by a conveyor head (56).

14. The tube manipulator as claimed in Claim 13, characterised in that on its periphery the conveyor head (56) is provided with several rollers (57) pretensioned radially outwards.

15. The tube manipulator as claimed in Claim 13, characterised in that the conveyor head (56) is equipped with a camera system (58).

16. The tube manipulator as claimed in Claim 1, characterised in that the flexible shaft (22) is constituted by parts of a flexible shaft which are coupled together inside the carriages (6, 7, 8, 9).

17. The tube manipulator as claimed in Claim 1, characterised in that the flexible shaft (22a) comprises at least one articulated shaft with at least two universal joints (59).

18. The tube manipulator as claimed in Claims 16 and 17, characterised in that the flexible shaft (22, 22a) is constituted by parts of a flexible shaft and of an articulated shaft.

## Revendications

1. Manipulateur pour parcourir des conduites tubulaires en direction axiale, comportant au moins un chariot dans lequel sont prévus deux galets de friction (13) qui sont diamétralement opposés l'un à l'autre, qui sont en contact avec la conduite tubulaire (1) et qui peuvent être entraînés en continu par un entraînement longitudinal commun, caractérisé en ce qu'au moins deux chariots (6, 7, 8, 9) sont reliés l'un à l'autre avec montage intermédiaire respectif d'un corps creux (21) élastique en flexion mais rigide en torsion; en ce que les galets de friction (13) de tous les chariots (6, 7, 8, 9) peuvent être entraînés par un arbre flexible (22, 22a) qui court à l'intérieur du corps creux (21) et à travers les chariots; et en ce que le plan médian (E-E) qui passe radialement à travers les deux galets de friction (13) d'un chariot est entraîné en rotation, autour de l'axe de rotation de l'arbre (22), par rapport au plan correspondant du chariot voisin.

2. Manipulateur selon la revendication 1, caractérisé en ce qu'il est prévu quatre chariots (6, 7, 8, 9); et en ce que le décalage, d'un chariot à un autre chariot, des plans médians (E-E) qui passent à travers les galets de friction (13) atteint 60° dans le même sens.

3. Manipulateur selon la revendication 2, caractérisé en ce que dans chaque chariot (6, 7, 8, 9) est disposé un mécanisme différentiel (30) entraîné par l'arbre flexible (22) et comportant deux arbres de sortie (35, 36) qui courent parallèlement au plan médian (E-E) et qui sont reliés, par l'intermédiaire chaque fois d'une courroie dentée (41, 42), avec chaque fois un mécanisme d'angle (43, 44) qui est situé du côté opposé du plan médian et qui agit directement sur le galet de friction respectif (13).

4. Manipulateur selon la revendication 3, caractérisé en ce que chaque chariot (6, 7, 8, 9) présente deux plaques supports (10, 11) parallèles, maintenues à une certaine distance et dans lesquelles sont guidés, avec possibilité de déplacement radial, des paliers (15) pour les galets de friction (13); et en ce que les paliers sont chargés radialement vers l'extérieur par des ressorts (19).

5. Manipulateur selon la revendication 4, caractérisé en ce que sur les plaques supports (10, 11) sont fixées par leurs extrémités, par paires, parallèlement aux plaques supports et au plan médian (E-E), des tiges de guidage (18); en ce que sur les paliers (15) sont rapportées des douilles (17) qui entourent, avec un certain jeu, les tiges de guidage; et en ce que les ressorts (19) sont placés, avec précontrainte (contrainte de compression), entre les douilles de paliers situés en face l'un de l'autre.

6. Manipulateur selon la revendication 1, caractérisé en ce que l'arbre flexible (22) est en liaison avec le mécanisme différentiel (30) par l'intermédiaire d'un mécanisme à vis sans fin (23, 32).

7. Manipulateur selon les revendications 3 et 4, caractérisé en ce que le mécanisme d'angle (43, 44) porte dans les paliers (15).

8. Manipulateur selon la revendication 1, caractérisé en ce que comme corps creux élastique en flexion mais rigide en torsion (21, 29) on a prévu des soufflets.

9. Manipulateur selon la revendication 8, caractérisé en ce que les soufflets sont en acier inoxydable.

10. Manipulateur selon la revendication 1, caractérisé en ce que l'entraînement longitudinal se fait au moyen d'un moteur (27) qui est également relié au chariot suivant le plus proche (6) par l'intermédiaire d'un corps creux élastique en flexion mais rigide en torsion (21, 29) et qui est couplé à l'arbre flexible (22).

11. Manipulateur selon la revendication 10, caractérisé en ce que le moteur (27) comporte, sur la périphérie de son carter (46), plusieurs galets (47) précontraints radialement vers l'extérieur.

12. Manipulateur selon la revendication 1, caractérisé en ce que les galets (47) sont disposés au point d'articulation médian (54) de chaque fois un système de leviers à genouillère (49, 53) dont les autres articulations (50, 52) ont leur portée sur des couronnes (48, 51) qui sont contraintes élastiquement en direction l'une de l'autre.

13. Manipulateur selon la revendication 1, caractérisé en ce qu'en avant du chariot le plus en avant (9) est montée une tête de transport (56).

14. Manipulateur selon la revendication 13, caractérisé en ce que la tête de transport (56) comporte sur sa périphérie plusieurs galets (57) précontraints radialement vers l'extérieur.

15. Manipulateur selon la revendication 13, caractérisé en ce que la tête de transport (56) est équipée d'un système de caméra (58).

16. Manipulateur selon la revendication 1, caractérisé en ce que l'arbre flexible (22) est composé d'éléments partiels d'un arbre souple qui sont couplés les uns aux autres à l'intérieur des chariots (6, 7, 8, 9).

17. Manipulateur selon la revendication 1, caractérisé en ce que l'arbre flexible (22a) est constitué d'au moins un arbre articulé comportant au moins deux articulations à cardan (59).

18. Manipulateur selon les revendications 16 et 17, caractérisé en ce que l'arbre flexible (22, 22a) est composé d'éléments partiels d'un arbre souple et d'un arbre articulé.

FIG. 1

# FIG. 2

# FIG. 3

# FIG. 4

FIG. 5

## FIG.6